# EUROPEAN PATENT APPLICATION

(11) **EP 1 770 701 A2**
(43) Date of publication of application: **04.04.2007**
(21) Application number: 06005435.0
(22) Date of filing: 16.03.2006
(51) Int. Cl.: G11B 20/10

(54) **Method of music data transcription**

(30) Priority: 30.09.2005 CN 200510107954
(71) Applicant: MY3IA (Bei Jing) Technology Ltd., Hai Dian District Beijing 100086 (CN)
(72) Inventor: Shih, Hsuanming, Chungli City, Taoyuan Hsien (CN)
(74) Representative: Beetz & Partner

(57) **Abstract**

The present invention relates to a method of music data transcription, comprising the steps of: (1) as the user connecting a peripheral mobile storage apparatus with a computer, the operation system of the computer being triggered to run the program for music data transcription; (2) the looking module of program for music data transcription detecting whether there is music data file available in the computer or peripheral equipment, if "yes" , then executing step (3) ; else ending; (3) the taking module of the program for music data transcription taking out the detected music data files from the computer or peripheral equipments; (4) the converting module of program for music data transcription converting the taken music files into music data file with another music data format; (5) the storing module of the program for music data transcription storing the music data file with another music data format in the peripheral mobile storage apparatus. Mapping the peripheral mobile storage apparatus into the device with auto-run function and using the auto-run function to auto-start the program for music data transcription. The present invention can easily converts music data in the computer or peripheral equipments into other data formats and stores the converted music in the peripheral mobile storage apparatus for user.

## Description

### Field of the Invention

The present invention relates to a method of music data transcription, more particularly to a method for automatically converting music data in the computer or peripheral equipments into other data formats and storing the converted data in a peripheral mobile storage apparatus under the function of auto-run or via user pressing the specific key when the peripheral mobile storage apparatus is connected with a computer.

### Background of the Invention

The music data have various data formats and can be stored in multiple storage mediums. The data formats of digital music mostly consist of MP3, WAV, WMA and RA, and they are normally stored in the hard disk of a computer or a mobile storage apparatus such as a MP3 player. Audio CD (Audio Compact Disc) is to store the track data in the compact disc. SACD(Super Audio Compact Disc)is a new specification developed by the Sony and Philips together, which can have multi-channel capacity. MD (Mini Disc) is a music storage media produced in quantity and formally marketed by Sony in 1992, which used ATRAC (Adaptive Transform Acoustic Coding) technology.

Various different music data formats possess their own characters thus they are adapted to meet each different utilization requirement.

The expression "MP3" is the abbreviation of MPEG Audio Layer 3. MPEG compression format is a group of standards about pictures and sounds established by the Motion Picture Experts Group in which MP3 is one kind of new standard of audio signal compression format designed for compressing sound signals. MP3 is one format for compressing audio signals with using Layer-3 compression mode of audio frequency in international standard MPEG and is also called "music in computer network" by Chinese. The sound quality of music compressed by MP3 is near the CD; however, the size of file is one twelfths of the CD.

The expression "WMA" is the abbreviation of Windows Media Audio. The WMA format uses decreasing data flow rate but keeping sound quality to achieve the goal of higher compression ratio which usually gets 1:18 ratio, and the size of produced file is half the corresponding MP3 file. In addition, WMA also can add copy protection, play duration and times limitation even playing apparatus limitation via the DRM (Digital Rights Management) solution to strongly prevent pirating.

Users need access to different music data formats and storage mediums with different utilization requirements. For example using data format such as MP3 format etc with smaller space usage and relatively better sound quality to store the appreciated music in the Mp3 player and selecting data format with high sound quality and not easy loss such as CD track to store music data for long. With the development of digital technology, mobile phones support many music formats to satisfy the user's personal ring requirement.

The user needs converting the present music data into the appreciated music data formats and stores the converted file into the storage apparatus during the process of music data usage.

The current used approach is as follows: manually running the music software to convert the current music data into the most appropriate music data format, and connecting the specific storage apparatus with the computer to perform series of selection and copy etc operations, and then storing the converted music data in the specific storage apparatus. However, with the popularity of peripheral mobile storage apparatuses there are more and more portable apparatuses which can store and use music data, many people using music data don't know the operation of computer well. Therefore, the approach in regular use is becoming more and more inconvenient.

### Summary of the Invention

It is therefore an object of the present invention to provide a method of music data transcription for overcoming the deficiency in the prior art. So long as user plugs a peripheral mobile storage apparatus into a computer, music data can be converted into other needed data formats in the computer or peripheral equipments and stored into the peripheral mobile storage apparatus conveniently.

To achieve the above-said object, the present invention provides a method of music data transcription, comprising the steps of:
Step (1) as the user connecting a peripheral mobile storage apparatus with a computer, the operation system of said computer being triggered to run the program for music data transcription;
Step (2) the looking module of the program for music data transcription detecting whether there is music data file available in the computer or peripheral equipment, if "yes", then executing step (3); else ending;
Step (3) the taking module of the program for music data transcription taking out the detected music data files from the computer or peripheral equipments;
Step (4) the converting module of the program for music data transcription converting the taken music files into music data file with another music data format;
Step (5) the storing module of the program for music data transcription storing the music data file with another music data format in the peripheral mobile storage apparatus.

After the peripheral mobile storage apparatus is plugged into the computer, said computer recognizes the peripheral mobile storage apparatus and automatically calls the program for music data transcription in the peripheral mobile storage apparatus to run. Said peripheral mobile storage apparatus maps a data startup area into a device with auto-run function; said computer recognizes the peripheral mobile storage apparatus into a device with auto-run function after the user plugs peripheral mobile storage apparatus into the computer.

Sometimes users don't want to transcribe all music files, so between step (2) and step (3) there is a step of said program for music data transcription prompting the user to select music needed to be transcribed; and the step (3) is concretely described as following: the program of music data transcription takes music data files from said computer or a peripheral apparatus in accordance with the user' s selection.

when the detected music data files are multiple music data files, said taking module takes multiple music data files by turns, as one music data file is taken out, the file is outputted to the converting module and then the taking module takes next music data file till multiple detected music data files are finished taking out; the converting module in said step (4) converts the taken music data files into other music data file with another music data format by turns, as one music data file is converted, the converted music data file with another music data format is outputted to the storing module, and then next taken music data file is converted till all taken music data files are finished converting; and the storing module in step (5) stores music data files with another music data format by turns.

The storing module includes a first storage sub-module and a second storage sub-module, the step of said storing module storing music data files with another music data format by turns is concretely described as following: said first storage sub-module automatically builds a file folder on the computer locally and then stores music data files with another music data format in the local file folder on the computer orderly till all music data files with another music data format are finished storing; after the first storage sub-module stores the first music data file with another music data format, the second storage sub-module begins copying music data files with another music data format in the local file folder on the computer to the peripheral mobile storage apparatus till all music data files with another music data format are finished copying.

Said first storage sub-module sets a file folder in accordance with addresses of detected music data files on the computer.

Therefore, the method of the present invention can easily converts music data in the computer or peripheral equipments into other data formats and stores them into the converted music in the peripheral mobile storage apparatus. During the program for music data transcription, the operation of taking music data, converting format and storing file are paralleling performed so that the faster speed can be guaranteed. The converted files are stored in the file folders set according to the addresses of music data files so that the data can be looked up and used conveniently.

The solution provided by the present invention will be better understood from following, detailed description of preferred embodiments of the invention with reference to the drawings.

### Brief Description of the Drawings

FIG. 1 is first embodiment's flowchart diagram of the present invention of a method of music data transcription.
FIG. 2 is second embodiment's flowchart diagram of the present invention of a method of music data transcription.
FIG. 3 is third embodiment's flowchart diagram of the present invention of a method of music data transcription.
FIG. 4 is fourth embodiment's flowchart diagram of the present invention of a method of music data transcription.

### Detailed Description of the Preferred Embodiments

The present invention is to provide a method of music data transcription for conveniently converting music data into other needed data formats in the computer or peripheral equipments and store the converted data in a peripheral mobile storage apparatus so long as user plugging the peripheral mobile storage apparatus into a computer.

The peripheral mobile storage apparatus includes a data interface, a controller and storage means. In which the data interface is the interface for transmitting data between the peripheral mobile storage apparatus and the computer. The controller is used for controlling implementation of storage means exchanging data with operation system. The storage means is used for storing data.

The peripheral mobile storage apparatuses can be USB mobile storage device, MP3 players, MP4 players, mobile hard disks, digital cameras, personal digital assistants and reader plugged with storing card etc.

The data interface can be USB universal serial BUS, IEEE 1394 interface or CF interface.

The program for music data transcription includes: a looking module, a taking module, a converting module and a storing module. The looking module is used for looking up music data files in the computer and peripheral equipment; the taking module is used for taking music data files; the converting module is used for converting the taken files' format and the storing module is used for storing the converted files.

When the user needs to do music transcription of music files in the computer or peripheral equipment, the steps need to be executed as following:
Step (1) as the user connects the peripheral mobile storage apparatus to the computer, the operation system of the computer is triggered to run the program for music data transcription;
Step (2) the looking module of the program for music data transcription detects whether there is music data file available in the computer or peripheral equipment, if "yes", then executes step (3); else ends;
Step (3) the taking module of the program for music data transcription takes searched music data files from the computer or peripheral equipments;
Step (4) the converting module of the program for music data transcription converts the taken music files into music data file with another music data format;
Step (5) the storing module of the program for music data transcription stores the music data file with another music data format in the peripheral mobile storage apparatus.

### Exemplary embodiment 1

The WAV format, also called wave sound file, is the earliest digital audio format supported by the windows platform and its application program. The WAV format supports plentiful compression algorithms, multiple audio digits, sampling frequency and channels, which uses 44.1 kHz sampling frequency and 16 bits quantizing digit so that the sound quality is closer to the CD. However, storage size required for storing the WAV format is too large to conveniently communicate and transmits. While the user uses peripheral mobile storage apparatus with smaller capacity such as USB storage apparatus and the MP3 player etc, the user expects to convert the WAV format music into data formats with high compression ratio and better sound quality such WMA format and MP3 format.

Using the auto-run function to auto start the program for music data transcription.

After a USB mobile storage device is connected to a computer, the computer recognizes it and automatically calls the program for music data transcription in the USB mobile storage device to run.

In order to realize the auto-call and run of the program the USB mobile storage device maps the data startup area into CD-ROM with auto-run function. After the user connects the mobile storage device to the computer, the operation system of the computer recognizes it as CD-ROM with auto-run function and auto-runs the auto-run file Autorun. ini in the device, which is used to set auto-run the program for music data transcription so that realizes calling and running the program for music data transcription.

The USB mobile storage device includes a data startup area for storing the auto-run file Autorun.ini and the program for music data transcription specified to run by the auto-run file Autorun.ini, furthermore it can also store the common data needed to be exchanged. In addition, it also includes one or multiple data storage areas for storing the music files and the program specified to run by the auto-run file Autorun.ini etc.

Before automatically transcribing the music data, the auto-run file Autorun.ini is needed to be compiled to set the auto-run function of the program for music data transcription. And then the data including the revised auto-run file Autorun. ini and the program for music data transcription etc are written into the data startup area.

Only one thing needs the user to do, which is to plug the USB mobile storage device into the USB interface of the computer. After that, the music transcription can automatically start.

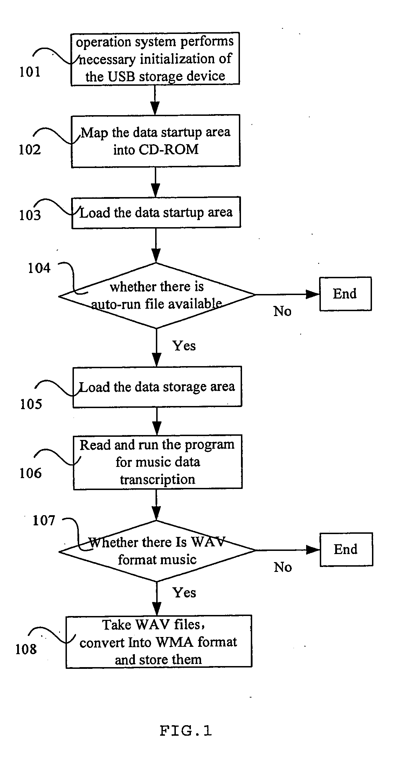

As shown in FIG.1, the steps of the embodiment are as follows:
Step (101) after the user plugs the USB mobile storage device into the computer, the operation system of the computer detects that there's a device plugged into the USB interface and then performs necessary initialization of the USB mobile storage device through the embedded USB interface driver program;
Step (102) after the initialization is finished; the USB mobile storage device maps the data startup area into CD-ROM;
Step (103) the operation system loads the data startup area of the USB mobile storage device;
Step (104) the operation system detects whether there is auto-run file Autorun.ini available in the data startup area or not, if yes, then executes step (105); else end;
Step (105) the operation system loads the data storage area of the USB mobile storage device according to the script in the auto-run file Autorun.ini;
Step (106) the operation system reads the program for music data transcription and starts the program to run according to the script in the auto-run file Autorun.ini;
Step (107) the looking module of the program for music data transcription detects whether there is WAV format music in the hard disk of the computer or not ,if yes then executes step (108), else end;
Step (108) the taking module of the program for music data transcription takes the wav format file from the hard disk of the computer, the converting module converts the taken file into WMA format and the storing module stores the WMA format music files in the USB mobile storage device.

The above-described solution realizes after the USB mobile storage device is plugged into the USB interface of the computer, the program for music data transcription is auto-started to run. During this transcription procedure, there's no need for user's operation.

### Exemplary embodiment 2

Most digital products support users' personal requirements, for example, the mobile phone provides self-defined incoming call reminder ring and short message reminder ring. The digital camera can also provide self-defined switch on or off and some specified operation's reminder ring. Nowadays most mobile phones can provide self-defined incoming call reminder ring and short message reminder ring. In which the short message reminder ring has short duration fitted for the reminder ring for on-off of the digital camera.

The data formats of the reminder rings are different in accordance with the different mobile phones. The reminder ring formats supported by the digital cameras are also in many kinds. While the user wants to store some reminder ring of the mobile phone into the digital camera as the reminder ring of the camera, there will appear the problem of the un-suited formats. Thus the formats need to be performed converting.

Set a data startup area on the memory card of the digital camera for storing the auto-run file Autorun. ini, the driver program of the digital camera and the program for music data transcription specified to run by the auto-run file Autorun.ini. The data startup area can further store other common data including common images. In addition, the memory card further includes one or multiple data storage areas for storing the image files and the program specified to run by the auto-run file Autorun.ini etc.

Before automatically transcribing music, the auto-run file Autorun.ini is needed to be compiled to set the auto-run function to the digital camera's driver program, the program for music data transcription and some necessary startup programs. And then the data including the auto-run file, Autorun.ini,, the digital camera's driver program, the program for music data transcription, startup programs and so on are written into the data startup area.

The conventional solutions have already realized that after the mobile phone is plugged into the computer, the user can check the ring information in the mobile phone through the computer. If the user only wants to take the reminder ring of the mobile phone as the reminder ring of the digital camera, the user only needs to connect the digital camera written with above-said auto-run file Autorun.ini with the computer, after that music transcription may be auto-started to run.

In this embodiment, the digital camera connects with the computer through the USB interface, before the digital camera is connected to the computer; the computer has already accomplished loading the storage area for storing reminder ring files in the mobile phone. The reminder ring format utilized in the mobile phone is IMY format, which is an audio file format developed by the Ericssion in 2000. The reminder ring format supported by the digital camera is MIDI (Musical Instrument Digital Interface) format.

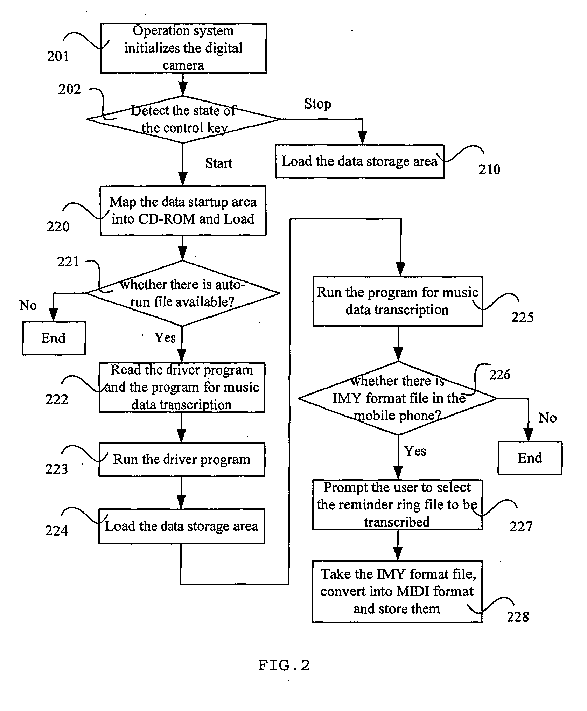

AS shown in FIG.2, the steps of the embodiment are as following:
Step (201) after the user plugs the digital camera into the computer, the operation system of the computer detects that there's a device plugged into the USB interface and then performs necessary initialization;
Step (202) after finishing the initialization, the digital camera detects the status of a start key, if the start key is on the stop status, then executes step (210), if it's on the start status, then executes step (220) ;
   When the user plugs the digital camera into the computer, usually the process of image data is needed. Thus in order to avoid music transcription unnecessary for user, setting the start key for the program for music transcription which can be multi-used with other functions or a specific setting control key. Only when the key is under the status of start, the computer is triggered to auto-run the program for music transcription;
Step (210) the operation system loads the data storage area waiting for the user's operation;
   The start key is on the status of stop, that means the user don't want to do music transcription, i.e. reminder ring transcription. Therefore, the following operation is operated according to the normal flow of the digital camera plugging into the computer;
Step (220) the digital camera maps the data startup area into CD-ROM and loads the data startup area;
Step (221) the operation system detects whether there is auto-run file Autorun. ini available in the data startup area or not, if yes, then executes step (222); else end;
Step (222) the operation system reads the driver program of the digital camera and the program for music data transcription according to the script in the auto-run file Autorun.ini;
Step (223) the operation system runs the driver program and updating the driver program by default of the operation system into the driver program of the digital camera;
Step (224) the operation system loads the data storage area of the digital camera according to the script in the auto-run file Autorun.ini;
Step (225) the operation system runs the program for music data transcription according to the script in the auto-run file Autorun.ini;
Step (226) the looking module of the program for music data transcription detects whether there is IMY format file in the mobile phone connected with the computer or not, if yes, then executes step (227), else end;
Step (227) the program for music data transcription prompts the user to select the reminder ring file to be transcribed;
   Generally large volume of reminder ring files are stored in the mobile phone, however, only a few files is expected to be reminder ring stored in the digital camera by the user. Thus before performing the operation of reminder ring files in the mobile phone, requiring the user which reminder ring files are needed to be operated and after that performing the operation in accordance with the user's selection;
Step (228) the taking module of the program for music data transcription takes the IMY format file from the mobile phone based on the users' selection, the converting module converts the taken file into MIDI format and the storing module stores the MIDI format files in the digital camera.

For each IMY format file, three operations, data taking, format converting and storing, are sequentially performed.

If there are multiple IMY format files, the taking module, the converting module and the storing module respectively perform their own work. The taking module takes every IMY file orderly, after taking out one IMY file, the file is outputted to the converting module and then next IMY file is taken till all IMY files selected by the user are taken out. The converting module converts the taken IMY files into MIDI format files by turns. After finishing one file's converting, then the converted MIDI file is outputted to the storing module and then next one IMY file is converted till all taken IMY format files are converted; the storing module stores each IMY format file in the digital camera orderly.

While the MIDI reminder ring files are stored in the digital camera, the user can utilize the reminder set function of the digital camera to perform operation.

The above-described solution realizes whether to auto-start running of the program for music data transcription is controlled by the user so as to avoid unnecessary music transcription.

### Exemplary embodiment 3

WAV format relative to other music formats is excellent in sound quality. The user who has the high requirement for the sound quality expects to convert the CD music data into WAV format then to store it in the computer or peripheral equipment, so that the high sound quality is guaranteed.

The peripheral mobile storage apparatus in this embodiment is a Flash card reader with USB interface. When the Flash card is plugged, the data stored in the Flash card can be read and it may automatically exchange data with the operation system in accordance with different Flash cards. In the embodiment the computer is triggered to auto-start the program of music data transcription by the auto-run function to convert music data into WAV format and store it in the Flash card.

The Flash card includes a data startup area and a data storage area. The auto-run file Autorun.ini and the programs specified to run in the auto-run file Autorun. ini etc are stored in the data startup area. And the common data to be exchanged is also stored in it. The WAV music files are stored in the data storage area as well as the programs specified to run in the auto-run file Autorun.ini and other common data needed to be exchanged.

Store the program for music data transcription in the data storage area of the Flash card. After the operation system loads the data storage area, it reads the program for music data transcription to run it.

Before performing automatically music transcription, the auto-run file Autorun.ini is needed to compile to set auto-run function of the program for music data transcription, and then the auto-run file Autorun. ini is written in the data startup area, as well as the program for music data transcription is written in the data storage area.

Firstly, the user puts a MD disk to be transcribed into the CD-driver; CD-driver may be equipments of the computer as well as the peripheral device, plugs the Flash card written with above-said auto-file Autorun.ini into the reader and then plugs the reader into the USB interface of the computer. After that, the music transcription may be auto-started.

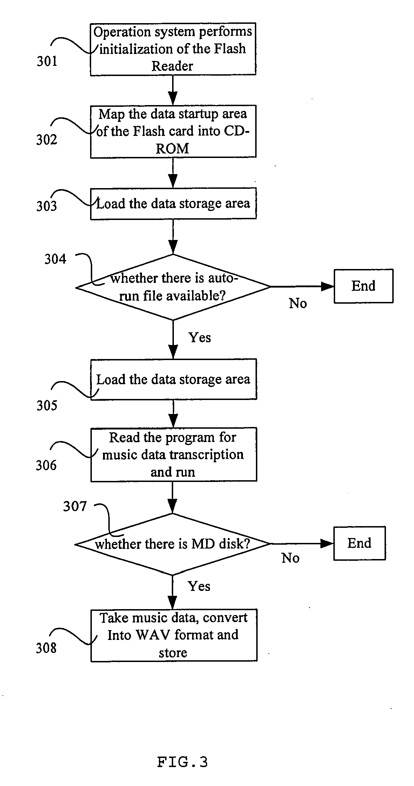

As shown in FIG.3, the steps of the embodiment are as following:
Step (301) after the user plugs the reader plugged with Flash card into the computer, the operation system of the computer detects that there's a device plugged into the USB interface through the embedded USB interface's driver program and then performs necessary initialization;
Step (302) after finishing the initialization, the reader maps the data startup area of the Flash card into CD-ROM;
Step (303) the operation system loads the data storage area;
Step (304) the operation system detects whether there is auto-run file Autorun.ini available in the data startup area or not, if yes, then executes step (305); else end;
Step (305) the operation system loads the data storage area according to the script in the Autorun.ini auto-run file;
Step (306) the operation system reads the program for music data transcription from the data storage area and runs it according to the script in the auto-run file Autorun.ini;
Step (307) the looking module of the program for music data transcription detects whether there is MD disk in the CD driver of the computer or not, if yes, then executes step (308), else end;
Step (308) the taking module of the program for music data transcription takes music data from the MD disk, the converting module converts the taken music data into WAV format, and the storing module stores the WAV format file in the computer and the Flash card.

If there is lots of music in the MD disk, the taking module, the converting module and the storing module also utilize the respective working mode. Due to the slow speed of storing the information in the Flash card, the converted files are stored in the computer firstly before stored the Flash card. Thus the storing module further includes a first storing sub-module and a second storing sub-module. For storing the files the first storing sub-module builds a file folder on the computer locally and then stores the converted WAV format files in the local file folder orderly till all WAV format files are finished storing. After the first storing sub-module stores the first one WAV format file, in the local file folder, the second storing sub-module begins copying the WAV format file of the file folder to the Flash card till all wav format files are finished copying.

Because the WAV format file occupies big size, in addition, sometimes the user uses the public computer and they don't want to keep information on the computer, therefore, after finishing transcription, the user is inquired whether to retain the converted files, if the user doesn't want to keep, then deletes them; if the user wishes to keep, then the user is prompted the position where files are stored or the converted files are stored in the position specified by the user.

### Exemplary embodiment 4

The MP3 player is widely utilized portable music playing device. The embodiment is to convert the track data of a music CD into MP3 file and store it in the MP3 player.

The storage means of the MP3 player comprises a data startup area for storing the auto-run file Autorun.ini and the program specified to run by the auto-run file Autorun. ini as well as common data needed to be exchanged. In addition, the storage means further comprises one or multiple data storage areas for storing the MP3 files and the program specified to run by the auto-run file Autorun.ini etc.

Considering sometimes user connects the MP3 player to the computer not for music transcription, so a control data for indicating start or stop the auto-run function is set in the data startup area of the MP3 player.

Before automatically transcribing music, the auto-run file Autorun.ini is needed to be compiled to set the auto-run function to the MP3 player's driver program and the program for music data transcription. Furthermore the data including the Auto run.ini auto-run file, the MP3 player' s driver program, the program for music data transcription, and so on are written in the data startup area.

If the user wants to transcribe music, then puts the music CD to be transcribed into the CD driver and sets the control data of the MP3 player to be on the start status, and then plugs the MP3 player written with auto-run file Autorun.ini into the USB interface of the computer, after that music transcribing can be started.

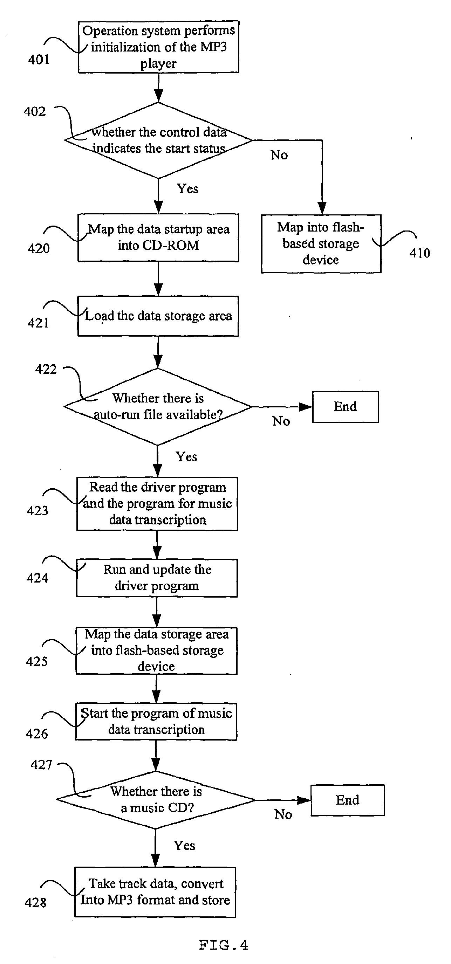

As shown in FIG.4, the steps of embodiment are as following:
Step (401) after the user plugging the reader plugged with Flash card into the computer, the operation system of the computer finds that there' s a device plugged into the USB interface and then performs necessary initialization through the embedded USB interface's driver program;
Step (402) after finishing the initialization, the MP3 player discriminates whether the control data in the startup data area indicates the start status, if yes, then executes step (420),else executes step (410);
   In order to avoid the music transcription unwanted by the user, discriminating whether to auto-run the auto-run function based on the control data, if the control data is "1", starting auto-run function; if the control data is "0", stopping auto-run function; if the auto-run function is started, the startup data area is needed to be mapped into the device with auto-run function e.g. CD-ROM;
Step (410) the MP3 player maps itself into flash-based storage device, and the operation system loads the storage area waiting for the user's operation;
Step (420) the MP3 player maps the data startup area of the storage means into CD-ROM;
Step (421) the operation system loads the data storage area;
Step (422) the operation system detects whether there is auto-run file Autorun. ini available in the data startup area or not, if yes, then executes step (423); else end;
Step (423) the operation system reads the MP3 player's driver program and the program for music data transcription according to the script in the auto-run file Autorun.ini;
Step (424) the operation system running and updating the driver program by default of operation system into the driver program of the MP3 player;
Step (425) the operation system maps the data storage area of the storage means of the MP3 player into flash-based storage device and loads according to the script in the auto-run file Autorun.ini;
Step (426) the operation system starting the program of music data transcription according to the script in the auto-run file Autorun.ini;
Step (427) the looking module of the program for music data transcription detects whether there is a music CD in the CD driver of the computer, if yes, then executes step (428), else end;
Step (428) the taking module of the program for music data transcription takes track data from the music CD, the converting module converts the taken track data into MP3 format, and the storing module stores the MP3 format file in the file folder named with music CD serial number in the computer and the Flash card.

The work mode of the looking module, converting module and storing module is similar to the third embodiment, as well as respective work. The difference between them is before the storing module copies the MP3 file; a file folder named with serial number music CD is established on the Flash card.

While the MP3 format music file is stored, the file name can use the track number so that each music file can be discriminated by the track number in corresponding file folders named with disk serial number.

Otherwise the file folder name also can use the combination form of the serial number and track number so that each piece of music file has own unique file folder name in all converted files stored in the computer. If the computer is connected with the internet, then the music name of each track can be obtained through the internet CDDB (Internet Compact Disc Database) .

After the file and the file folder is named with the defined formula, the user can conveniently find the converted file so that when transcription of the same disk, the needed files can be directly copy to the peripheral mobile storage apparatus to save the time for taking data and converting format.

It should be understood that the above embodiments are used only to explain, but not to limit the present invention. In despite of the detailed description of the present invention with referring to above preferred embodiments, it should be understood that various modifications, changes or equivalent replacements can be made by those skilled in the art without departing from the spirit and scope of the present invention and covered in the claims of the present invention.

## Claims

1. A method of music data transcription, comprising the steps of:
Step (1) the user connecting a peripheral mobile storage apparatus with a computer, so as to trigger the operation system of said computer to run the program for music data transcription;
Step (2) the looking module of the program for music data transcription detecting whether there is music data file available in the computer itself or peripheral equipment thereof, if "yes", then executing step (3); else ending;
Step (3) the taking module of the program for music data transcription taking out the detected music data files from the computer itself or peripheral equipments;
Step (4) the converting module of the program for music data transcription converting the taken music data files into music data files with another music data format;
Step (5) the storing module of the program for music data transcription storing the music data files with another music data format in the peripheral mobile storage apparatus.

2. The method as claimed in claim 1, wherein the step of triggering the operation system of said computer to run the program for music data transcription in step (1) is concretely described as following: after the peripheral mobile storage apparatus is plugged into the computer, said computer recognizes the peripheral mobile storage apparatus and automatically calls the program of music data transcription in the peripheral mobile storage apparatus to perform running.

3. The method as claimed in claim 2, wherein said peripheral mobile storage apparatus maps a data startup area thereof into a device with auto-run function; the step of said computer recognizing the peripheral mobile storage apparatus is concretely described as following: said computer recognizes the peripheral mobile storage apparatus into a device with auto-run function.

4. The method as claimed in claim 3, wherein the step of said peripheral mobile storage apparatus mapping a data startup area thereof into a device with auto-run function is concretely described as following: said peripheral mobile storage apparatus maps the data startup area of said peripheral mobile storage apparatus into CD-ROM.

5. The method as claimed in claim 3, wherein a control data is stored in said peripheral mobile storage apparatus, and the step of said peripheral mobile storage apparatus mapping a data startup area thereof into a device with auto-run function is concretely described as following: said peripheral mobile storage apparatus determines whether to map said data startup area thereof into a device with auto-run function based on the control data.

6. The method as claimed in claim 1, wherein said step (1) is concretely described as following: the user connects a peripheral mobile storage apparatus with a computer, a control key of said peripheral mobile storage apparatus is multi-used defined as a start key of the program for music data transcription, said computer determines whether to start to call the program of music data transcription of the peripheral mobile storage apparatus to run based on the status of the key.

7. The method as claimed in claim 1, wherein step (1) is concretely described as following: the user connects a peripheral mobile storage apparatus with a computer, a control key of said peripheral mobile storage apparatus is defined as a start key of the program for music data transcription, said computer determines whether to start to call the program of music data transcription of the peripheral mobile storage apparatus to run based on the status of the key.

8. The method as claimed in claim 1, wherein between step (2) and step (3) there is a step of said program for music data transcription prompting the user to select music needed to be transcribed; and the step (3) is concretely described as following: the program for music data transcription takes music data files from said computer or a peripheral apparatus in accordance with the user's selection.

9. The method as claimed in claim 1, wherein when the detected music data files in said step (3) are multiple music data files, said taking module takes multiple music data files by turns, as one music data file is taken out, the file is outputted to the converting module and then the taking module takes next music data file till multiple detected music data files are finished taking out; the converting module in said step (4) converts the taken music data files into other music data file with another music data format by turns, as one music data file is converted, the converted music data file with another music data format is outputted to the storing module, and then next taken music data file is converted till all taken music data files are finished converting; and the storing module in step (5)stores music data files with another music data format by turns.

10. The method as claimed in claim 9, wherein the storing module in step (5) includes a first storing sub-module and a second storing sub-module, the step of said storing module storing music data files with another music data format by turns is concretely described as following: said first storing sub-module automatically builds a file folder on the computer locally and then stores music data files with another music data format in the local file folder on the computer orderly till all music data files with another music data format are finished storing; After the first storing sub-module stores the first music data file with another music data format, the second storing sub-module begins copying music data files with another music data format in the local file folder on the computer to the peripheral mobile storage apparatus till all music data files with another music data format are finished copying.

11. The method as claimed in claim 10, wherein the step of said first storing sub-module automatically building a file folder on the computer locally is concretely described as following: said first storing sub-module sets a file folder in accordance with addresses of detected music data files on the computer locally.

12. The method as claimed in claim 10, wherein the step of storing music data files with another music data format in the local file folder on the computer orderly is concretely described as following: storing music data files with another music data format in the local file folder on the computer orderly according to names same as the corresponding detected music data files.

13. The method as claimed in claim 10, wherein the step of said second storing sub-module beginning copying music data files with another music data format in the local file folder on the computer to the peripheral mobile storage apparatus is concretely described as following: said second storing sub-module sets up the corresponding file folder on the peripheral mobile storage apparatus and stores music data files with another music data format in the local file folder on the computer in the corresponding file folder on the peripheral mobile storage apparatus according to the same name.
